# EUROPEAN PATENT APPLICATION

(11) **EP 4 541 869 A1**
(43) Date of publication of application: **23.04.2025**
(21) Application number: 24803681.6
(22) Date of filing: 08.05.2024
(51) Int. Cl.: C10G 1/00, C10G 1/10, C10G 55/04

(54) **METHOD OF PREPARING PYROLYSIS OIL FROM WASTE PLASTICS**

(30) Priority: 11.05.2023 KR 20230061366
(71) Applicant: LG Chem, Ltd., Seoul 07336 (KR)
(72) Inventor: JEONG, Jun Kyo, Daejeon 34122 (KR); LEE, Sang Beom, Daejeon 34122 (KR); LEE, Sung Ho, Daejeon 34122 (KR)
(74) Representative: Goddar, Heinz J.
(86) International application number: PCT/KR2024/006118
(87) International publication number: WO 2024/232628

(57) **Abstract**

The present invention provides a method of preparing pyrolysis oil from waste plastics, the method including: (S1) supplying a waste plastic raw material to a pyrolysis reactor to perform pyrolysis, discharging a gaseous stream produced by the pyrolysis through a top of the pyrolysis reactor, and then condensing the gaseous stream to obtain liquid oil; (S2) performing a pressure reduction treatment and condensation on oil remaining at a bottom of the pyrolysis reactor to additionally obtain liquid oil; and (S3) refining the liquid oil obtained in steps (S1) and (S2), wherein the pyrolysis is performed by controlling an internal pressure of the pyrolysis reactor in the range of more than 1 bar to 40 bar.

## Description

### [Technical Field]

### CROSS-REFERENCE TO RELATED APPLICATION

The present application claims the benefit of priority to Korean Patent Application No. 10-2023-0061366, filed on May 11, 2023, the entire contents of which are incorporated herein by reference.

### Technical Field

The present invention relates to the pyrolysis of waste plastics to fuel oil, and more particularly to a method of preparing light hydrocarbon oil at a high yield by improving pyrolysis efficiency of waste plastics.

### [Background Art]

Recently, the development and use of plastics having physical properties required for various applications and purposes have increased. Plastics require a lot of energy from crude oil extraction to preparation, and a large amount of carbon is emitted in the process. Furthermore, even when plastics used in various products are discarded, environmental pollution and enormous disposal costs occur, and thus, recycling of waste plastics has become an important social issue.

In general, a method of recycling waste plastics (resins) includes mechanical recycling, chemical recycling, and thermal recycling. The mechanical recycling is a method of crushing and selecting collected waste plastics, separating the waste plastics by type, melting the waste plastics using an extruder, and mixing the waste plastics with a new material at a certain ratio or adding a functional additive when pelletizing the waste plastics to produce a resin product. The chemical recycling is a method of extracting only a specific polymer using various chemical means, or recovering and repolymerizing pure single molecules. The thermal recycling is a method of burning waste plastics and recovering the waste plastics as heat energy.

In particular, the chemical recycling may reduce greenhouse gases compared to incineration of waste plastics and has recently received attention in terms of alternative fuel development.

For example, when a waste plastic such as a polyethylene or polypropylene material is heated and pyrolyzed at a certain temperature, a gaseous stream containing a mixture of non-condensable gas and liquid oil may be produced, and highly viscous residual wax that is not completely decomposed may be discharged. In accordance with an increase in the importance of liquid oil among the pyrolysis products as fuel oil for producing a petrochemical product, studies to increase the yield of the liquid oil have been actively conducted.

The liquid oil produced by the pyrolysis of waste plastics, that is, pyrolysis oil, is usually mixed oil containing C₅₋₁₂ light hydrocarbon oil such as naphtha and longer-chain hydrocarbon oil. When a large amount of high-boiling point components are included in such mixed oil, the yield of high-value-added light hydrocarbon oil is limited, and the amount of heavy oil components produced and the amount of residual wax discharged are excessive.

In order to solve these problems, a method of performing a contact decomposition reaction by catalytic cracking during pyrolysis of waste plastics, a method of condensing heavy hydrocarbon (that is, long-chain hydrocarbon) components in a pyrolysis product of waste plastics using a contactor and then circulating the components to a pyrolysis reactor so that the components are subjected to the pyrolysis process again, and the like have been proposed. However, these methods are limited in improving pyrolysis efficiency of waste plastics, and therefore are only used for recycling of mixed oil.

Therefore, there is a need to develop a technique capable of improving the pyrolysis process of waste plastics and improving the yield of high-quality light hydrocarbon oil.

### [Disclosure]

### [Technical Problem]

In order to solve the problems mentioned in the background art, an object of the present invention relates to a method of preparing light hydrocarbon oil with a high yield by improving pyrolysis efficiency of waste plastics by suppressing vaporization of high-boiling point components and selectively increasing a residence time of liquid components through control of a reaction pressure during pyrolysis of the waste plastics.

### [Technical Solution]

In one general aspect, a method of preparing pyrolysis oil from waste plastics includes: (S1) supplying a waste plastic raw material to a pyrolysis reactor to perform pyrolysis, discharging a gaseous stream produced by the pyrolysis through a top of the pyrolysis reactor, and then condensing the gaseous stream to obtain liquid oil; (S2) performing a pressure reduction treatment and condensation on oil remaining at a bottom of the pyrolysis reactor to additionally obtain liquid oil; and (S3) refining the liquid oil obtained in steps (S1) and (S2), wherein the pyrolysis is performed by controlling an internal pressure of the reactor in the range of more than 1 bar to 40 bar.

### [Advantageous Effects]

According to the present invention, the pyrolysis of the waste plastics is performed at a higher pressure than atmospheric pressure, such that the vaporization of the high-boiling point components is suppressed and the residence time of the liquid components in the reactor is selectively increased, thereby improving the decomposition efficiency of the waste plastics. Through this, the selectivity and productivity of light hydrocarbon oil among pyrolysis products may be increased.

In addition, after the pyrolysis under high pressure conditions, a reduced pressure treatment is performed on the oil remaining in the reactor to increase vaporization of liquid hydrocarbons, such that the yield of pyrolysis oil may be further increased and the discharge of residual wax may be minimized.

Furthermore, the use of the light hydrocarbon oil obtained by the pyrolysis of waste plastics may reduce greenhouse gas emissions caused when supplying a raw material to a petrochemical process, may improve process efficiency such as energy consumption saving, and may be environmentally advantageous as no harmful gases are produced when processing waste plastics.

### [Description of Drawings]

FIGS. 1 to 5 illustrate the results of high-pressure pyrolysis of waste plastics (PE/PP mixture) in Examples 1 to 5, respectively.
FIG. 6 illustrates the result of pyrolysis of waste plastics (PE/PP mixture) at atmospheric pressure (1 bar) in Comparative Example 1.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

The meaning "including" or "containing" used in the present application specifies a specific property, region, integer, step, operation, element, and/or component, and does not exclude addition of another specific property, region, integer, step, operation, element, and/or component.

The term "stream" used in the present application may refer to a flow of a fluid in a process, and may also refer to a fluid flowing through a pipe itself. Specifically, the stream may refer to both a fluid flowing through a pipe connecting respective devices to each other itself and a flow of a fluid. In addition, the fluid may include any one or more components of gas, liquid, and solid.

The term "Cₙ" used in the present application refers to all hydrocarbons having n carbon atoms, and for example, "C₅₋₁₂" refers to all hydrocarbon molecules having 5 to 12 carbon atoms.

The term "liquid oil" used in the present application refers to a product obtained by converting a gaseous stream obtained in a pyrolysis step into a liquid state by condensation, and may also be referred to as "liquid distilled oil".

In addition, the "pressure" referred to in the present application refers to an absolute pressure measured based on a complete vacuum.

A method of preparing pyrolysis oil from waste plastics according to an embodiment of the present invention includes (S1) performing pyrolysis and condensation on a waste plastic raw material, (S2) performing a heat treatment and condensation on residual oil, and (S3) performing refining.

Hereinafter, the method of preparing pyrolysis oil from waste plastics according to the present invention will be described in detail for each step.

First, a waste plastic raw material is prepared and supplied to a pyrolysis reactor, and pyrolysis is performed (S1).

The waste plastics may include a natural polymer, a synthetic polymer, or a mixture thereof, and the synthetic polymer may include thermoplastic resins such as polyethylene, polypropylene, and polystyrene. In addition, the thermoplastic resin may be a mixture of other types of resins such as PVC and PET, a thermosetting resin, and the like.

The waste plastics such as these materials may be subjected to, after collecting and selecting, a pretreatment process including crushing, washing, drying, and melting. The pretreatment process may be performed by a general method in the art.

For example, a size of crushed waste plastic is not particularly limited, but the waste plastics may be crushed to a size range of 0.5 to 6.0 cm, and then, the washed and dried waste plastic crushed material may be put into a tubular melter such as an extruder and then melted. The extruder has an extrusion function by melting and kneading, and may be, for example, a twin-screw extruder. When the waste plastic is a thermoplastic resin such as polyethylene, polypropylene, or a mixture thereof, a melting temperature may be 120 to 350°C or 150 to 250°C, but is not limited thereto.

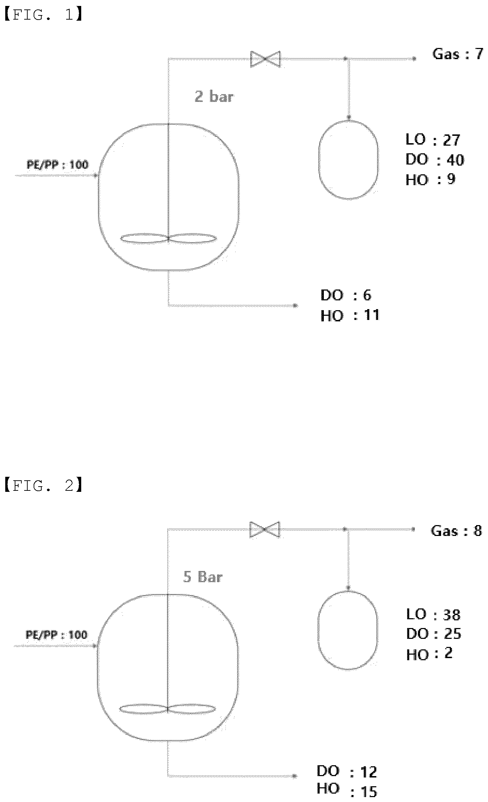

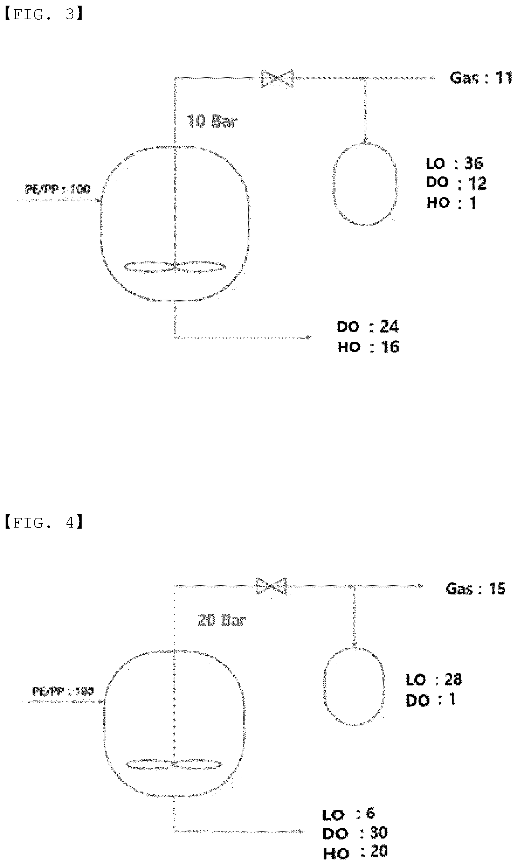

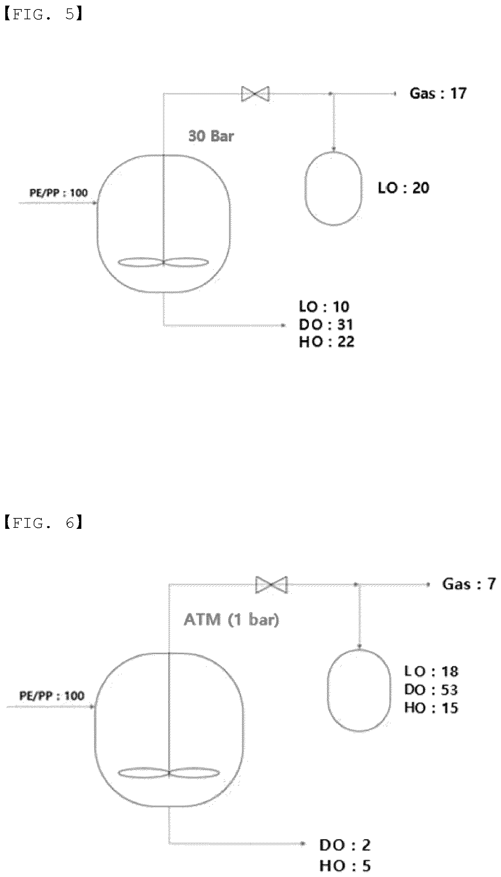

The waste plastic melt obtained by the pretreatment process is supplied to the pyrolysis reactor as a raw material. The pyrolysis reactor that may be used in the present invention may be a stirred tank reactor equipped with an agitator (see FIGS. 1 to 5), the agitator is not particularly limited as long as it may sufficiently agitate the waste plastic melt supplied as a raw material, and may be, for example, a helical ribbon type or an anchor type, and it is advantageous to maintain a gap of about 5 mm to 1 cm from an inner wall of the reactor to maximize agitation of the waste plastics and heat transfer through the wall of the reactor. In addition, the reactor may be operated in either a batch type or continuous type. In addition, the reactor may be purged with nitrogen to maintain an oxygen-free or low-oxygen atmosphere while performing a pyrolysis reaction of the waste plastic melt.

The waste plastic melt is supplied to the stirred reactor and heated while operating the agitator to perform pyrolysis of the waste plastic melt.

The heating of the waste plastics may be performed by transferring high-temperature heat to the waste plastics by passing high-temperature/high-pressure steam, hot water, heat transfer fluid, or the like through a jacket provided on the outside of the reactor, but is not particularly limited thereto.

The existing waste plastic pyrolysis process has been usually performed under atmospheric pressure conditions to vaporize C₁₋₄ gas components, C₅₋₁₂ light hydrocarbons such as naphtha, and longer-chain hydrocarbons and discharge them through the top of the reactor, while remaining residual wax being not vaporized at the bottom of the reactor. In the pyrolysis process under atmospheric pressure conditions, the top discharge stream of the reactor contains a large amount of high-boiling point components. Thereby, the yield of high-value-added light hydrocarbon oil is limited, while the production of heavy oil components and the discharge of the residual wax may excessively increase.

Accordingly, the present invention is to increase the selectivity for conversion into light hydrocarbons during the pyrolysis of waste plastics, by controlling the pressure of the reactor in the condition higher than atmospheric pressure, for example, a high pressure of more than 1 bar to 40 bar, preferably 2 to 30 bar, and more preferably 5 to 10 bar. More specifically, a pressure control valve (PCV) may be installed at the top of the reactor and the PCV may vent vapor when a gas pressure generates above a certain rage during the pyrolysis reaction of waste plastics, such that the internal pressure of the reactor is controlled to be higher than atmospheric pressure and the gas produced in the pyrolysis reaction may be continuously discharged through the top of the reactor.

By controlling the high pressure of the pyrolysis reactor, vaporization of high-boiling point components during the pyrolysis reaction may be suppressed and a liquid residence time of the high-boiling point components may be increased. The increase in liquid residence time improves the decomposition reaction efficiency of waste plastics and increases the selectivity for conversion into light hydrocarbons, such that high-value-added light hydrocarbon oil may be prepared with a high yield.

That is, when the pressure of the pyrolysis reactor is controlled to be higher than atmospheric pressure, as the liquid residence time is increased, the pyrolysis reaction of waste plastics may be performed for 1 to 8 hours, and specifically, 2 to 6 hours, and in this process, a conversion rate of polymers into light hydrocarbons, for example, C₅₋₁₂ hydrocarbons, may be increased.

On the other hand, when the pyrolysis reaction is performed at atmospheric pressure or lower, the vaporization of high-boiling point components may not be effectively suppressed, and a proportion of high-boiling point components having more than 12 carbon atoms in the top discharge stream of the reactor may be increased. When the pyrolysis reaction is performed at a pressure of more than 40 bar, C₅₋₁₂ hydrocarbons may not be discharged through the top of the reactor and may remain inside the reactor for a long time, resulting in excessive production of pyrolysis by-product gas (for example, C₁₋₄ gas) that is non-condensable and may not be liquefied at room temperature.

Meanwhile, the raw material of the waste plastic is mainly a thermoplastic resin, and for example, considering that the raw material of the waste plastic may be a mixture containing polyethylene having a number average molecular weight of 10,000 to 500,000, and specifically, 100,000 to 300,000, or polypropylene having a number average molecular weight of 5,000 to 300,000, and specifically, 10,000 to 200,000, the pyrolysis reaction is advantageously performed in a range of 400 to 450°C, and specifically, 420 to 430°C. When the pyrolysis temperature is lower than 400°C, a pyrolysis rate may be slow, and when the pyrolysis temperature is higher than 450°C, the pyrolysis rate may be fast, but an excessive amount of solid carbides such as char may be produced due to high heat.

Through the pyrolysis reaction, 20 to 90 wt% or 25 to 80 wt% of the weight of the waste plastic raw material may be produced as pyrolysis gas and discharged through the top of the reactor.

Specifically, the top discharge stream of the reactor may be a gaseous stream containing C₁₋₄ hydrocarbons, C₅₋₁₂ light hydrocarbons, C₁₃₋₂₂ intermediate hydrocarbons, and C₂₃₋₄₀ heavy hydrocarbons. Among them, C₁₋₄ hydrocarbons such as methane, ethane, and propane are separated by evaporation due to non-condensability, and the remaining hydrocarbons are condensed to obtain liquid distilled oil.

The condensation is a process of cooling the pyrolysis gas, and through this, a polymerization reaction of hydrocarbons in the high-temperature pyrolysis gas discharged from the pyrolysis reactor may be suppressed and a heat load of a subsequent process (refining process) may be reduced. For example, when the gaseous stream discharged through the top of the pyrolysis reactor is supplied to a condenser and heat exchange is performed with quench oil or quench water, cooling and condensation may occur and liquid oil may thus be obtained, and the liquid oil may be discharged through the bottom of the condenser and transferred to a storage tank. A cooling temperature by the heat exchange may be 0 to 50°C, and specifically, 20 to 30°C. Meanwhile, the gas components (for example, C₁₋₄ gas) that are not condensed in the heat exchange may be discharged through the top, and may be used as a heat source in the petrochemical process through a subsequent process such as compression.

The liquid oil that is condensed and then transferred to the storage tank after the pyrolysis may contain C₅₋₁₂ light oil (LO), C₁₃₋₂₂ middle oil (MO), and C₂₃₋₄₀ heavy oil (HO), and among them, an amount of the C₅₋₁₂ light oil (LO) may be 30 to 100 wt%, and specifically, 35 to 99 wt%, based on the total weight of the liquid oil. In addition, the amount of the C₅₋₁₂ light oil (LO) may be 20 to 70 wt%, and specifically, 25 to 50 wt%, based on the weight of the waste plastic raw material before the pyrolysis.

That is, in the present invention, as the vaporization of high-boiling point components is suppressed by performing the pyrolysis of waste plastics at a pressure higher than atmospheric pressure, the selectivity for light hydrocarbons among the pyrolysis products is improved, and thus, C₅₋₁₂ light oil (LO) may be obtained with a high yield.

Meanwhile, in the pyrolysis reaction, a part of the waste plastic melt may not be vaporized and remains at the bottom of the reactor in the form of liquid oil. A pressure reduction treatment and condensation are performed to induce additional vaporization of the residual oil (S2).

The pressure reduction treatment may be performed by a flash method that lowers the pressure to atmospheric pressure (1 bar) after the previous pyrolysis reaction, and may promote the vaporization of the components that are not vaporized in the previous pyrolysis and remain at the bottom of the reactor, such that the yield of liquid oil may be increased, and the amount of residual wax discharged may be minimized. In this case, when the heat treatment is performed under high pressure conditions as in the previous pyrolysis, it is difficult to induce sufficient vaporization of the residual oil.

During such a pressure reduction treatment, a heat treatment may be simultaneously performed by heating the reactor. The heat treatment may be performed in a temperature range of 400 to 450°C, and additional pyrolysis of the residual oil may be performed during the process. In this case, when the heat treatment temperature is lower than 400°C, it is difficult to induce sufficient vaporization of the residual oil, and when the heat treatment temperature is higher than 450°C, the formation of solid carbides such as char may be accelerated.

In addition, the pressure reduction treatment may be appropriately determined considering the composition of the residual oil remaining at the bottom of the reactor, and may be performed for, for example, 1 to 8 hours, and specifically, 2 to 6 hours.

If necessary, the pressure reduction treatment and the heat treatment may be performed using an additional reactor of a screw type or a plug flow type.

The gas produced by the pressure reduction treatment may be obtained as liquid oil through condensation. The condensation may be performed in the same manner as during the pyrolysis. The liquid oil obtained by the heat treatment may also be collected in the storage tank before being transferred to the subsequent refining step.

Thereafter, the liquid oil obtained in the pyrolysis and pressure reduction treatment steps is refined to separate components (S3).

Since the liquid oil obtained in the previous steps is mixed oil containing light hydrocarbons and longer-chain hydrocarbons, the liquid oil is supplied to a multi-stage distillation column and subjected to a refining process in which stepwise separation is performed by a boiling point.

The refining process may be performed in a general manner in the art, and is not particularly limited. For example, a feed stream supplied to the distillation column may contain all light and heavy oil components obtained by the pyrolysis of waste plastics, a stream containing low-boiling point light hydrocarbons may be discharged through the top of the distillation column, and a stream containing high-boiling point heavy hydrocarbons may be discharged through the bottom of the distillation column.

The feed stream supplied to the distillation column may be mixed oil containing oil components obtained by the pyrolysis of waste plastics, that is, C₅₋₁₂ light oil (LO), C₁₃₋₂₂ middle oil (MO), and C₂₃₋₄₀ heavy oil (HO), and a stream containing C₅₋₁₂ light components may be separated and discharged through the top of the distillation column.

In an embodiment of the present invention, the C₅₋₁₂ light hydrocarbons separated through the top of the distillation column may be an amount of 30 to 99 wt%, and specifically, 35 to 99 wt%, based on the total weight of the feed stream, that is, the liquid oil (mixed oil). The C₅₋₁₂ light hydrocarbons obtained with a high yield may be condensed and then efficiently used as high-quality fuel oil.

In particular, the C₅₋₁₂ light hydrocarbon fuel oil finally obtained in the present invention has a boiling point of 0 to 230°C, and specifically, 30 to 216°C, a kinematic viscosity at 40°C of 0.3 to 1.0 cSt, and specifically, 0.4 to 0.9 cSt, and a flash point of -80°C or higher (for example, -40°C), and may thus be efficiently used as a petrochemical raw material.

According to the present invention as described above, the pyrolysis of the waste plastics is performed at a higher pressure than atmospheric pressure, such that the vaporization of the high-boiling point components is suppressed and the residence time of the liquid components in the reactor is selectively increased, thereby improving the decomposition efficiency of the waste plastics. Through this, the selectivity and productivity of light hydrocarbon oil among pyrolysis products may be increased.

In addition, after the pyrolysis under high pressure conditions, a reduced pressure treatment is performed on the oil remaining in the reactor at a lower pressure (for example, atmospheric pressure of 1 bar) to increase vaporization of liquid hydrocarbons, such that the yield of pyrolysis oil may be increased and the discharge of residual wax may be minimized.

Furthermore, the use of the light hydrocarbon oil obtained from the pyrolysis of waste plastics may reduce greenhouse gas emissions caused when supplying a raw material to a petrochemical process, may improve process efficiency such as energy consumption saving, and may be environmentally advantageous as no harmful gases are produced when processing waste plastics.

Hereinafter, the present invention will be described in more detail with reference to Examples. However, the following Examples are provided for illustrating the present invention. It is apparent to those skilled in the art that various modifications and alterations may be made without departing from the scope and spirit of the present invention, and the scope of the present invention is not limited thereto.

### Example 1:

As illustrated in FIG. 1, 100 parts by weight of a waste plastic melt containing polyethylene (PE) and polypropylene (PP) at a weight ratio of 6:4 was supplied to a stirred tank reactor, the reactor was heated by an external heating means, and when the temperature reached 430°C, a pyrolysis reaction was performed for 2 hours while maintaining a constant temperature. At this time, the internal pressure of the reactor was controlled to 2 bar by venting vapor generated during the pyrolysis reaction using a pressure control valve provided at the top of the reactor.

The gas produced during the pyrolysis reaction was continuously discharged through the top of the reactor and introduced into a condenser connected to the reactor, and then cooled to 25°C to obtain condensed liquid oil, and a non-condensed gas component was discharged.

Subsequently, the oil remaining at the bottom of the reactor was transferred to a rear screw-type reactor arranged in series, subjected to pressure reduction to atmospheric pressure (1 bar) with a heat treatment at 450°C, and then condensed, thereby obtaining additional liquid oil.

The liquid oil obtained above was supplied to a distillation column and refined by separation according to a boiling point, thereby finally preparing C₅₋₁₂ light hydrocarbon pyrolysis oil.

### Example 2:

The same process as in Example 1 was performed except that the internal pressure of the reactor in which the pyrolysis was performed was controlled to 5 bar.

### Example 3:

The same process as in Example 1 was performed except that the internal pressure of the reactor in which the pyrolysis was performed was controlled to 10 bar.

### Example 4:

The same process as in Example 1 was performed except that the internal pressure of the reactor in which the pyrolysis was performed was controlled to 20 bar.

### Example 5:

The same process as in Example 1 was performed except that the internal pressure of the reactor in which the pyrolysis was performed was controlled to 30 bar.

### Comparative Example 1:

The same process as in Example 1 was performed except that the internal pressure of the reactor in which the pyrolysis was performed was controlled to atmospheric pressure.

FIGS. 1 to 6 illustrate the compositions of the pyrolysis products according to Examples 1 to 5 and Comparative Example 1, respectively. Specifically, fractions of non-condensable C₁₋₄ gas, condensed liquid distilled oil (including C₅₋₁₂ light oil (LO), C₁₃₋₂₂ middle oil (MO), and C₂₃₋₄₀ heavy oil (HO)), and residual oil in the composition were calculated by using a peak area ratio for each region according to the carbon number in a mass spectrometry spectrum obtained by analysis by GC-MS.

Table 1 shows the fraction of LO (C₅₋₁₂) in liquid oil and the yield of LO (C₅₋₁₂) based on the amount of waste plastic raw material supplied according to pyrolysis conditions.

**[Table 1]**

| | Pyrolysis conditions | Pyrolysis product composition (wt% based on the amount of raw material supplied) | | | C₅₋₁₂ fraction in liquid oil | Yield of C₅₋₁₂ with respect to amount of raw material supplied |
|---|---|---|---|---|---|---|
| Example 1 | 2 bar (430°C) | Gas | C₁₋₄ | 7 | 36% | 27% |
| | | Liquid oil | C₅₋₁₂ LO | 27 | | |
| | | | C₁₃₋₂₂ MO | 40 | | |
| | | | C₂₃₋₄₀ HO | 9 | | |
| | | Residual | C₁₃₋₂₂ MO | 6 | | |
| | | oil | C₂₃₋₄₀ HO | 11 | | |
| Example 2 | 5 bar (430°C) | Gas | C₁₋₄ | 8 | 58% | 38% |
| | | Liquid oil | C₅₋₁₂ LO | 38 | | |
| | | | C₁₃₋₂₂ MO | 25 | | |
| | | | C₂₃₋₄₀ HO | 2 | | |
| | | Residual oil | C₁₃₋₂₂ MO | 12 | | |
| | | | C₂₃₋₄₀ HO | 15 | | |
| Example 3 | 10 bar (430°C) | Gas | C₁₋₄ | 11 | 73% | 36% |
| | | Liquid oil | C₅₋₁₂ LO | 36 | | |
| | | | C₁₃₋₂₂ MO | 12 | | |
| | | | C₂₃₋₄₀ HO | 1 | | |
| | | Residual oil | C₁₃₋₂₂ MO | 24 | | |
| | | | C₂₃₋₄₀ HO | 16 | | |
| Example 4 | 20 bar (430°C) | Gas | C₁₋₄ | 15 | 93% | 34% |
| | | Liquid oil | C₅₋₁₂ LO | 28 | | |
| | | | C₁₃₋₂₂ MO | 1 | | |
| | | Residual oil | C₅₋₁₂ LO | 6 | | |
| | | | C₁₃₋₂₂ MO | 30 | | |
| | | | C₂₃₋₄₀ HO | 20 | | |
| Example 5 | 30 bar (430°C) | Gas | C₁₋₄ | 17 | 100% | 30% |
| | | Liquid oil | C₅₋₁₂ LO | 20 | | |
| | | Residual oil | C₅₋₁₂ LO | 10 | | |
| | | | C₁₃₋₂₂ MO | 31 | | |
| | | | C₂₃₋₄₀ HO | 22 | | |
| Comparative Example 1 | Atmospheric pressure (1 bar) (430°C) | Gas | C₁₋₄ | 7 | 21% | 18% |
| | | Liquid oil | C₅₋₁₂ LO | 18 | | |
| | | | C₁₃₋₂₂ MO | 53 | | |
| | | | C₂₃₋₄₀ HO | 15 | | |
| | | Residual oil | C₁₃₋₂₂ MO | 2 | | |
| | | | C₂₃₋₄₀ HO | 5 | | |

From Table 1, it could be confirmed that, in Examples 1 to 5 in which the pyrolysis of waste plastics was performed at a high pressure of 2 to 30 bar, the fraction of LO (C₅₋₁₂) in the liquid oil and the yield of LO (C₅₋₁₂) based on the amount of waste plastic raw material supplied were improved compared to Comparative Example 1 in which the pyrolysis was performed at atmospheric pressure. These results result from the improvement of the decomposition efficiency of waste plastics as the residence time of the liquid components in the reactor is increased by suppressing the vaporization of high-boiling components through the pyrolysis performed by controlling the internal pressure of the reactor to be higher than atmospheric pressure.

More specifically, in Examples 1 to 3 that the pyrolysis was performed at a pressure of 2 to 10 bar, all of C₅₋₁₂ light hydrocarbons from the waste plastic raw material were vaporized and discharged. In Examples 4 and 5 that the pressure was controlled to a relatively higher pressure of 20 bar and 30 bar, all of the light hydrocarbons were not vaporized and some of them remained as residual oil, but the light hydrocarbons were vaporized from the residual oil through a flash effect by lowering the pressure during additional pyrolysis, and therefore, the overall yield of light hydrocarbon pyrolysis oil with respect to the amount of raw material supplied was improved.

Meanwhile, in Comparative Example 1, as the pyrolysis was performed at 430°C under atmospheric pressure conditions, the content of components vaporized in the decomposition reaction of the waste plastic melt was increased, but the selectivity for high-quality light hydrocarbons in the obtained liquid oil was decreased.

## Claims

1. A method of preparing pyrolysis oil from waste plastics, the method comprising:
(S1) supplying a waste plastic raw material to a pyrolysis reactor to perform pyrolysis, discharging a gaseous stream produced by the pyrolysis through a top of the pyrolysis reactor, and then condensing the gaseous stream to obtain liquid oil;
(S2) performing a pressure reduction treatment and condensation on oil remaining at a bottom of the pyrolysis reactor to additionally obtain liquid oil; and
(S3) refining the liquid oil obtained in steps (S1) and (S2),
wherein the pyrolysis in step (S1) is performed by controlling an internal pressure of the pyrolysis reactor in the range of more than 1 bar to 40 bar.

2. The method of claim 1, wherein the pyrolysis in step (S1) is performed by controlling the internal pressure of the reactor in the range of 2 to 30 bar.

3. The method of claim 1, wherein the pyrolysis of step (S1) is performed at a temperature of 400 to 450°C.

4. The method of claim 1, wherein in the pressure reduction treatment of step (S2), a heat treatment is further performed.

5. The method of claim 1, wherein the liquid oil obtained in step (S1) is mixed oil containing C₅₋₁₂ light oil (LO), C₁₃₋₂₂ middle oil (MO), and C₂₃₋₄₀ heavy oil (HO).

6. The method of claim 5, wherein the C₅₋₁₂ light oil (LO) is contained in an amount of 30 to 100 wt% based on the total weight of the liquid oil.

7. The method of claim 5, wherein the C₅₋₁₂ light oil (LO) is obtained in an amount of 20 to 70 wt% based on the weight of the waste plastic raw material.

8. The method of claim 1, wherein the pyrolysis reactor is a reactor equipped with an agitator.

9. The method of claim 1, wherein the waste plastic raw material includes a mixture containing polyethylene (PE) or polypropylene (PP).

10. The method of claim 1, wherein the waste plastic raw material is subjected to a pretreatment process including crushing, washing, drying and melting, prior to being supplied to the pyrolysis reactor.
